# EUROPEAN PATENT APPLICATION

(11) **EP 2 873 449 A1**
(43) Date of publication of application: **20.05.2015**
(21) Application number: 14189517.7
(22) Date of filing: 20.10.2014
(51) Int. Cl.: B01D 46/00

(54) **Cylindrical filtration apparatus assembly**

(30) Priority: 21.10.2013 US 201314058320
(71) Applicant: BHA Altair, LLC, Franklin, TN 37067 (US)
(72) Inventor: Smith, Peter John Duncan, Basingstoke, Hampshire RG24 9RW (GB); Bryant, Paul Sherwood, Alton, hampshire GU34 2QE (GB)
(74) Representative: Pronovem

(57) **Abstract**

The present application provides a filtration apparatus assembly having a holding frame with a number of square holding frame apertures. The filtration apparatus assembly may include a cylindrical filter and a mounting frame. The mounting frame may include a mounting frame aperture sized for the cylindrical filter and a mounting frame flange sized for the square holding frame apertures.

## Description

### TECHNICAL FIELD

The present application and the resultant patent relate generally to gas turbine engines and more particularly relate to a cylindrical filtration apparatus assembly with a cylindrical pulse cartridge filter in a square mounting frame for use in a conventional filter house and the like.

### BACKGROUND OF THE INVENTION

Power generation equipment, such as a gas turbine engine and the like, generally uses a large supply of intake air to support the combustion process. Various types of inlet air filtration systems thus may be used upstream of the compressor air inlet. Impure air laden with dust particles, salts, and other contaminants may cause damage to the compressor blades, other types of compressor components, and other components of the gas turbine engine in general. Contaminates may cause damage via corrosion, erosion, and the like. Such damage may reduce the life expectancy and performance of the compressor and reduce the overall efficiency of the gas turbine engine. To avoid these problems, the inlet airflow generally passes through a series of filters and screens to assist in removing the contaminants before they reach the compressor.

Such filters may include "V-cell" type or mini-pleat filters, cylindrical pulse cartridges, and other types of filtration devices. Mini-pleat filters are generally planar and square in configuration. Such mini-pleat filters may have a limited useful media surface in that increases in media depth may limit the ability to pleat the media. By comparison, cylindrical pulse cartridge filters and the like may have a relatively higher dust holding capacity ("DHC"). Existing filter houses and the like, however, may not be well suited for mounting such cylindrical pulse cartridges given the use of the existing square mini-pleat filters.

There is thus a desire for an improved filtration system for use with a compressor and similar components. Such an improved filtration system may accommodate cylindrical pulse cartridge filters and the like so as to benefit from the higher dust holding capacity regardless of the existing mounting configuration of the filter house or other structure.

### SUMMARY OF THE INVENTION

The present application and the resultant patent thus provide a filtration apparatus assembly having a holding frame with a number of square holding frame apertures. The filtration apparatus assembly may include a cylindrical filter and a mounting frame. The mounting frame may include a mounting frame aperture sized for the cylindrical filter therein and a mounting frame flange sized for the square holding frame apertures.

The present application and the resultant patent further provide a method of retrofitting a filtration apparatus assembly. The method may include, but is not limited to, the steps of removing a number of mini-pleat filters from a number of square holding frame apertures within a holding frame, installing a number of mounting frames having a substantially trapezoid-like shape within the square holding frame apertures, and positioning a cylindrical filter within each of the mounting frames having the trapezoid-like shape.

The present application and the resultant patent further provide a filtration apparatus. The filtration apparatus may include a cylindrical filter and a trapezoid-like mounting frame. The mounting frame may include a mounting frame aperture sized for the cylindrical filter and a mounting frame flange sized for a square holding frame aperture.

These and other features and improvements of the present application and the resultant patent will become apparent to one of ordinary skill in the art upon review of the following detailed description when taken in conjunction with the several drawings and the appended claims.

### BRIEF DESCRIPTION OF THE DRAWINGS

Fig. 1 is a schematic diagram of a gas turbine engine showing a compressor, a combustor, a turbine, and a filtration apparatus assembly.
Fig. 2 is a front plan view of a filtration apparatus assembly as may be described herein.

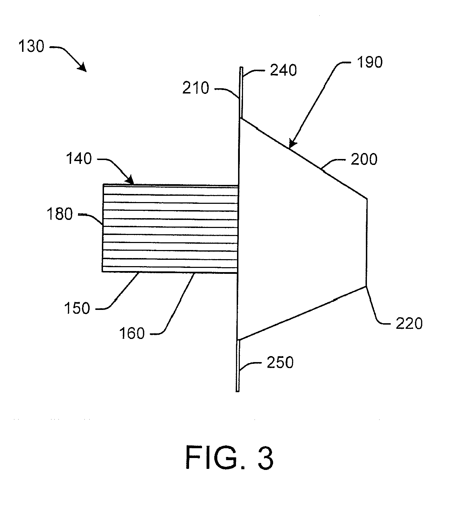

Fig. 3 is a top plan view of a filtration apparatus as may be used in the filtration apparatus assembly of Fig. 2.
Fig. 4 is a side cross-sectional view of the filtration apparatus of Figs. 2 and 3.
Fig. 5 is a side cross-sectional view of an alternative embodiment of a filtration apparatus as may be described herein.

### DETAILED DESCRIPTION

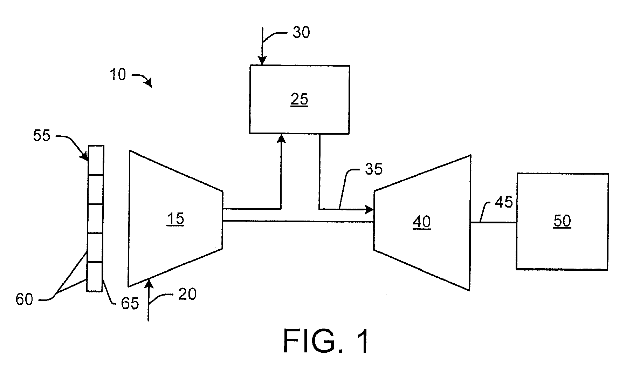

Referring now to the drawings, in which like numerals refer to like elements throughout the several views, Fig. 1 shows a schematic view of gas turbine engine 10 as may be used herein. The gas turbine engine 10 may include a compressor 15. The compressor 15 compresses an incoming flow of air 20. The compressor 15 delivers the compressed flow of air 20 to a combustor 25. The combustor 25 mixes the compressed flow of air 20 with a pressurized flow of fuel 30 and ignites the mixture to create a flow of combustion gases 35. Although only a single combustor 25 is shown, the gas turbine engine 10 may include any number of combustors 25. The flow of combustion gases 35 is in turn delivered to a turbine 40. The flow of combustion gases 35 drives the turbine 40 so as to produce mechanical work. The mechanical work produced in the turbine 40 drives the compressor 15 via a shaft 45 and an external load 50 such as an electrical generator and the like.

The gas turbine engine 10 may use natural gas, liquid fuels, various types of syngas, and/or other types of fuels or blends thereof. The gas turbine engine 10 may be any one of a number of different gas turbine engines offered by General Electric Company of Schenectady, New York, including, but not limited to, those such as a 7 or a 9 series heavy duty gas turbine engine and the like. The gas turbine engine 10 may have different configurations and may use other types of components. Other types of gas turbine engines also may be used herein. Multiple gas turbine engines, other types of turbines, and other types of power generation equipment also may be used herein together.

The gas turbine engine 10 also may be used with a filtration apparatus assembly 55. The filtration apparatus assembly 55 may include any number of filtration apparatuses 60 positioned therein. The filtration apparatus assembly 55 may be positioned upstream of the compressor 15 so as to filter the incoming flow of air 20. The filtration apparatus assembly 55 may be configured as a filter house or other type of structure. In this example, the filtration apparatuses 60 may be in the form of a number of mini-pleat filters 65 and the like. As described above, such mini-pleat filters 65 may have a generally square, planar configuration. Other types of filters and other configurations also may be known. Differing types of filter media also may be used herein.

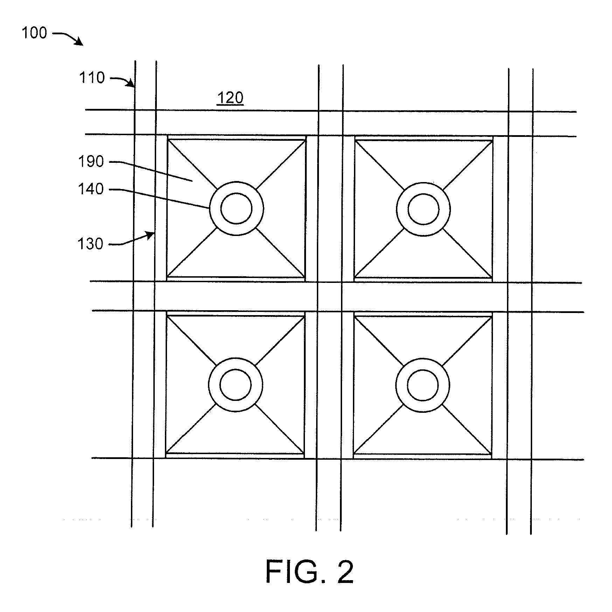

Fig. 2 shows an example of a filtration apparatus assembly 100 as may be described herein. The filtration apparatus assembly 100 may include a holding frame 110. The holding frame 110 may define any number of substantially square holding frame apertures 120. The holding frame 110 and the holding frame apertures 120 may have any size, shape, or configuration. The holding frame 110 may be original equipment and/or part of a retrofit. The holding frame 110 may have been designed originally to support a number of square mini-pleat type filtration apparatuses such as those described above and the like. The filtration apparatus assembly 100 may be in the form of a filter house or other type of structure positioned about the compressor 15 or elsewhere.

The filtration apparatus assembly 100 may include a number of filtration apparatuses 130 positioned within the square holding frame apertures 120 of the holding frame 110. Any number of the filtration apparatuses 130 may be used herein. In this example, the filtration apparatuses 130 may be in the form of a number of cylindrical filters 140. The cylindrical filters 140 may be in the form of pulse cartridge type filters and the like (although a pulse cleaning system is not required). By "cylindrical", we mean any type of substantially non-square type geometry. More specifically, any type of quadric surface may be used herein. For example, conically shaped filters and the like with one end of the "cylinder" having a larger diameter than a second end also may be used herein. Other "cylindrical" shapes include oval, elliptical, tear drop-like, and similar shapes. The cylindrical filters 140 may be of conventional design and may have any size, shape, or configuration.

Generally described, the cylindrical filters 140 may include a filter media 150 therein. The filter media 150 may be made from cellulose, blends of cellulose and polyester, glass microfiber, blends of glass microfiber and synthetic fibers, composites, and the like. Any type of filter media 150 may be used herein. The filter media 150 may be in the form of a number of pleats 160. Any number of the pleats 160 may be used herein at any depth and/or angle. The cylindrical filters 140 may include a central passageway 170 surrounded by the pleats 160 of the filter material 150. In this example, the cylindrical filters 140 may be enclosed on one end by an end cap 180. Other components and other configurations may be used herein.

The filtration apparatus 130 also may include a mounting frame 190. The mounting frame 190 may have a substantial trapezoid-like shape 200. Other shapes, such as pyramid-like, cone-like, and similar structures that extend from a wide end 210 to a narrow end 220 also may be used herein. The mounting frame 190 may have any size, shape, or configuration. The mounting frame 190 may be made from any type of substantially rigid material. The mounting frame 190 may have a cylindrical mounting frame aperture 230 about the narrow end 220 thereof. The cylindrical mounting frame aperture 230 may be sized so as to position the cylindrical filter 140 therein. The mounting frame 190 also may include a mounting flange 240 about the wide end 210. The mounting flange 240 may have a substantially square-like shape 250. The square-like shape 250 of the mounting flange 240 of the mounting frame 190 may be sized to be positioned within the square holding frame apertures 120 of the holding fame 110. A number of support vanes also may be used. Other components and other configurations may be used herein. More than one cylindrical mounting frame aperture 230 also may be used herein.

In use, any number of the filtration apparatuses 130 with the cylindrical filter 140 positioned within the mounting frame 190 may be installed within the holding frame 110. Each filtration apparatus 130 thus provides the higher dust holding capacity of the cylindrical filter 140 such as the pulse cartridge filters while also accommodating the square holding frame apertures 120 of the existing holding frame 110 and similar structures. Moreover, the trapezoid-like shape 200 or a similar shape that extends from the wide end 210 to the narrow end 220 of the mounting frame 190 assists in directing the flow of air 20 into the cylindrical filter 140 for an increase in overall efficiency with a reduced pressure drop.

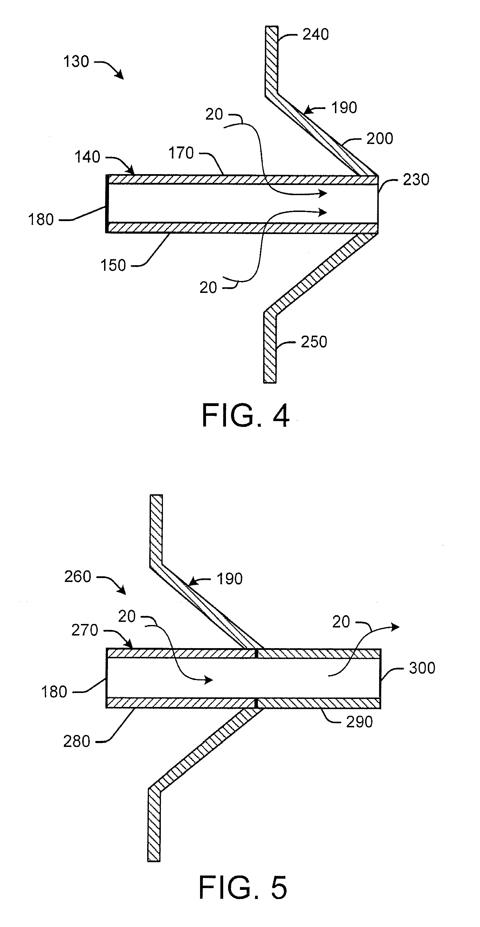

Fig. 5 shows an alternative embodiment of a filtration apparatus 260 as may be described herein. In this example, the filtration apparatus 260 may include a two-stage filter cartridge 270. A first stage 280 may be positioned within the mounting frame 190 while a second stage 290 may extend beyond the mounting frame 190. The second stage 290 may include a second stage end cap 300. The stages 280, 290 may include the same or different filter media 150 therein. The filtration apparatus 260 thus provides for two-stage filtering of the incoming air 120 as it passes through the filter media 150 in both of the stages 280, 290. Other components and other configurations also may be used herein.

The filtration apparatus assembly 110 and the filtration apparatuses 130, 260 described herein thus provide the improved dust holding capacity of the cylindrical filter 140 in a conventional square holding frame 110. Differing types of cylindrical filters 140 may be used herein. The filtration apparatuses 130 may be original equipment and/or replacement equipment. Other components and other configurations may be used herein.

It should be apparent that the foregoing relates only to certain embodiments of the present application and the resultant patent. Numerous changes and modifications may be made herein by one of ordinary skill in the art without departing from the general spirit and scope of the invention as defined by the following claims and the equivalents thereof.

The invention covers, in particular, embodiments as defined in the following clauses, numbered 1 to 20:
Clause 1. A filtration apparatus assembly having a holding frame with a number of square holding frame apertures, the filtration apparatus assembly comprising:
   a cylindrical filter; and
   a mounting frame;
   the mounting frame comprising a mounting frame aperture sized for the cylindrical filter and a mounting frame flange sized for the square holding frame apertures.
Clause 2. The filtration apparatus assembly of clause 1, wherein the cylindrical filter comprises a cylindrical pulse cartridge filter.
Clause 3. The filtration apparatus assembly of clause 1, wherein the cylindrical filter comprises a filter media therein.
Clause 4. The filtration apparatus assembly of clause 3, wherein the filter media comprises cellulose, blends of cellulose and polyester, glass microfiber, blends of glass microfiber and synthetic fibers, and/or composites.
Clause 5. The filtration apparatus assembly of clause 3, wherein the filter media comprises a plurality of pleats.
Clause 6. The filtration apparatus assembly of clause 1,wherein the cylindrical filter comprises a central passageway therein.
Clause 7. The filtration apparatus assembly of clause 1, wherein the mounting frame comprises a substantial trapezoid-like shape.
Clause 8. The filtration apparatus assembly of clause 1, wherein the mounting frame extends from a wide end about the mounting flange to a narrow end about the mounting frame aperture.
Clause 9. The filtration apparatus assembly of clause 1, wherein the mounting flange comprises a substantial square-like shape.
Clause 10. The filtration apparatus assembly of clause 1, wherein the cylindrical filter comprises an end cap.
Clause 11. The filtration apparatus assembly of clause 1, wherein the cylindrical filter comprises a two stage cylindrical filter.
Clause 12. The filtration apparatus assembly of clause 11, wherein the two stage cylindrical filter comprises a first stage within the mounting frame and a second stage downstream of the mounting frame.
Clause 13. The filtration apparatus assembly of clause 12, wherein the first stage comprises a first end cap and wherein the second stage comprises a second end cap.
Clause 14. The filtration apparatus assembly of clause 1, wherein the cylindrical filter comprises a substantially non-square type geometry including a cone, an oval, an ellipse, or any type of quadric surface.
Clause 15. A method of retrofitting a filtration apparatus assembly, comprising:
   removing a plurality of mini-pleat filters from square holding frame apertures within a holding frame;
   installing a plurality of mounting frames having a trapezoid-like shape within the square holding frame apertures; and
   positioning a cylindrical filter within each of the plurality of mounting frames having the trapezoid-like shape.
Clause 16. A filtration apparatus, comprising:
   a cylindrical filter; and
   a trapezoid-like mounting frame;
   the mounting frame comprising a mounting frame aperture sized for the cylindrical filter and a mounting frame flange sized for a square holding frame aperture.
Clause 17. The filtration apparatus of clause 16, wherein the cylindrical filter comprises a cylindrical pulse cartridge filter.
Clause 18. The filtration apparatus of clause 16, wherein the cylindrical filter comprises a plurality of pleats.
Clause 19. The filtration apparatus of clause 16, wherein the mounting frame extends from a wide end about the mounting flange to a narrow end about the mounting frame aperture.
Clause 20. The filtration apparatus of clause 16, wherein the cylindrical filter comprises a two stage cylindrical filter.

## Claims

1. A filtration apparatus assembly having a holding frame with a number of square holding frame apertures, the filtration apparatus assembly comprising:
a cylindrical filter; and
a mounting frame;
the mounting frame comprising a mounting frame aperture sized for the cylindrical filter and a mounting frame flange sized for the square holding frame apertures.

2. The filtration apparatus assembly of claim 1, wherein the cylindrical filter comprises a cylindrical pulse cartridge filter.

3. The filtration apparatus assembly of claim 1, wherein the cylindrical filter comprises a filter media therein.

4. The filtration apparatus assembly of claim 3, wherein the filter media comprises cellulose, blends of cellulose and polyester, glass microfiber, blends of glass microfiber and synthetic fibers, and/or composites.

5. The filtration apparatus assembly of claim 3, wherein the filter media comprises a plurality of pleats.

6. The filtration apparatus assembly of claim 1, wherein the cylindrical filter comprises a central passageway therein.

7. The filtration apparatus assembly of claim 1, wherein the mounting frame comprises a substantial trapezoid-like shape.

8. The filtration apparatus assembly of claim 1, wherein the mounting frame extends from a wide end about the mounting flange to a narrow end about the mounting frame aperture.

9. The filtration apparatus assembly of claim 1, wherein the mounting flange comprises a substantial square-like shape.

10. The filtration apparatus assembly of claim 1, wherein the cylindrical filter comprises an end cap.

11. The filtration apparatus assembly of claim 1, wherein the cylindrical filter comprises a two stage cylindrical filter.

12. The filtration apparatus assembly of claim 11, wherein the two stage cylindrical filter comprises a first stage within the mounting frame and a second stage downstream of the mounting frame.

13. The filtration apparatus assembly of claim 12, wherein the first stage comprises a first end cap and wherein the second stage comprises a second end cap.

14. The filtration apparatus assembly of claim 1, wherein the cylindrical filter comprises a substantially non-square type geometry including a cone, an oval, an ellipse, or any type of quadric surface.

15. A method of retrofitting a filtration apparatus assembly, comprising:
removing a plurality of mini-pleat filters from square holding frame apertures within a holding frame;
installing a plurality of mounting frames having a trapezoid-like shape within the square holding frame apertures; and
positioning a cylindrical filter within each of the plurality of mounting frames having the trapezoid-like shape.
